(19) Europäisches Patentamt
European Patent Office
Office européen des brevets

(11) EP 2 865 682 B1

(12) **EUROPEAN PATENT SPECIFICATION**

(45) Date of publication and mention of the grant of the patent:
**26.10.2016 Bulletin 2016/43**

(51) Int Cl.:
***C07F 5/02*** (2006.01) ***C07C 229/34*** (2006.01)

(21) Application number: **13190413.8**

(22) Date of filing: **28.10.2013**

# (54) Process for preparing 4-Borono-L-Phenylalanine

Verfahren zur Herstellung von 4-Borono-l-Phenylalanin

Procédé de préparation de 4-borono-L-phénylalanine

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.04.2015 Bulletin 2015/18**

(73) Proprietor: **Taiwan Biotech Co., Ltd.**
**Taoyuan City**
**Taoyuan Hsien (TW)**

(72) Inventors:
- **Sheu, Kuen-Wang**
  **Taoyuan City, Taoyuan Hsien (TW)**
- **Huang, Shu-Fen**
  **Taoyuan City, Taoyuan Hsien (TW)**
- **Shaw, Chia-Cheng**
  **Taoyuan City, Taoyuan Hsien (TW)**

(74) Representative: **Becker Kurig Straus**
**Patentanwälte**
**Bavariastrasse 7**
**80336 München (DE)**

(56) References cited:
- **HIROYUKI NAKAMURA ET AL: "A Practical Method for the Synthesis of Enantiomerically Pure 4-Borono-L-phenylalanine", BULLETIN OF THE CHEMICAL SOCIETY OF JAPAN, CHEMICAL SOCIETY OF JAPAN, TOKYO, JP, vol. 73, no. 1, 1 January 2000 (2000-01-01), pages 231-235, XP008166752, ISSN: 0009-2673, DOI: 10.1246/BCSJ.73.231 [retrieved on 2001-10-31]**
- **FALK WIENHOLD ET AL: "Synthesis of Functionalized Benzoboroxoles for the Construction of Boronolectins", SYNTHESIS, vol. 2011, no. 24, 27 December 2011 (2011-12-27), pages 4059-4067, XP055096793, ISSN: 0039-7881, DOI: 10.1055/s-0031-1289577**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 865 682 B1

## Description

1. Field of the Invention

The present invention relates to a process for preparing a boronated compound useful for treating cancer, particularly to a process for preparing 4-borono-L-phenylalanine (L-BPA).

2. Description of the Prior Arts

4-borono-L-phenylalanine (L-BPA) is an important boronated compound known to be useful for treatment of cancer through boron neutron capture therapy (BNCT). Many syntheses of L-BPA have been developed.

As shown in formula A, two synthesis approaches of L-BPA including formation (a) and formation (b) have been developed.

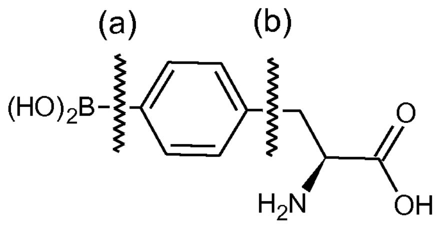

Formula A

The approach demonstrated as formation (a) is by introduction of boronic acid group into phenylalanine, which is based on forming the C-B bond directly by the introduction of the dihydroxylboryl substituent to the phenylalanine fragment. J.Org.Chem.1998, 63, 8019 discloses a process undergoing palladium-catalyzed cross-coupling between an amine-protected L-4-iodophenylalanine, such as (S)-N-Boc-4-iodophenylalanine, and a diboron compound, such as bis-(pinacolato)diboron. L-BPA is then obtained after removal of the protection group of amine and boronic acid of the phenylalanine. However, an additional pre-process is further required for preparing the boronating agent, resulting in more time consumption and complicacy of the process, and thereby failing to prepare L-BPA in high yield. The prior art discloses that the carboxylic acid of
(S)-N-Boc-4-iodophenylalanine reactant is protected into benzyl ester to improve the yield of the obtained protected L-BPA up to 88%. However, an additional step of removing the benzyl ester protection group of the carboxylic acid of the protected L-BPA is further needed, which complicates the synthetic process. Accordingly, the drawbacks of this method also include the additional pre-process for preparing the boronating agent as mentioned above, and further include the time-consuming and multi-step synthesis involving the protection step of the carboxylic acid and the deprotection step of the carboxylic acid afterwards.

Another approach demonstrated as formation (b) involving coupling reaction between an amino acid and a boron-containing benzyl or benzaldehyde fragment is also developed. Biosci.Biotech.Biochem.1996, 60, 683 discloses an enantioselective synthesis of L-BPA by coupling cyclic ethers of boronic acid and a chiral derivative from L-valine, wherein the cyclic ethers of boronic acid are prepared from 4-boronobenzylbromide in advance. However, the last synthetic step of the method readily results in undesired racemization of the amino acid. Thus, an enzymatic resolution step, which typically reduces the production yield, is required to obtain optically pure L-BPA. Accordingly, the drawbacks of this method still include the additional pre-process for preparing the boronating agent, resulting in more time consumption and complicacy of the process, and thereby failing to prepare L-BPA in high yield.

Besides, $^{10}B$ contained in L-BPA is known as the critical factor accumulated in tumor cells and subsequently irradiated with thermal neutron. Thus $^{10}B$ renders L-BPA a treatment of cancer through boron neutron capture therapy (BNCT). However, natural boron exists as 19.9% of $^{10}B$ isotope and 80.1% of $^{11}B$ isotope. Therefore, many researchers have been developing synthetic processes suitable for producing L-BPA, and preferably suitable for producing $^{10}B$-enriched L-BPA.

As disclosed in J. Org. Chem.1998, 63, 8019 mentioned above, the conventional methods comprise multi-step syntheses of the boronating agents, which reduce a large amount of $^{10}B$-enriched materials during the process. As a result, the methods are not suitable for producing $^{10}B$-enriched L-BPA.

As disclosed in Biosci.Biotech.Biochem.1996, 60, 683 mentioned above, an optically pure L-BPA is not obtained until the enzymatic resolution step; furthermore, multi-step syntheses for preparing the boronating agent render the transformations of the $^{10}B$-enriched materials during the process. Hence, the conventional method is not suitable for

producing $^{10}B$-enriched L-BPA as well.

Furthermore, Bull.Chem.Soc.Jpn.2000, 73, 231-235 discloses a method based on coupling 4-iodo-L-phenylalanine and pinacolborane in the presence of palladium catalyst. However, since the prior art is silent on how to produce $^{10}B$-enriched L-BPA and also $^{10}B$-enriched pinacolborane is not commercially available, the method is not suitable for producing $^{10}B$-enriched L-BPA, either.

In addition, *Synlett.* **1996**,167 discloses a method by coupling iodophenylborate and L-serine zinc derivatives. The method involves indispensable pre-preparation of the L-serine zinc derivatives and the pre-preparation of the iodophenylborate, thereby giving a low yield of L-BPA. Besides, the method is still not suitable for producing $^{10}B$-enriched L-BPA, for both $^{10}B$-enriched $BI_3$ and 1,3-diphenylpropane-1,3-diol adopted in the method are not commercially available.

Synthesis 2011, 24, 4059-4067 discloses the borylation of the N,C-protected *p*-bromophenylalanine through halo-metal exchange synthesis. Said N,C-protected *p*-bromophenylalanine is reacted with a boronating agent, isopropoxyboronic acid pinacol ester, and two organolithium agents, methyl lithium and *t*-BuLi, to undergo the halo-metal exchange. However, the crude product obtained from the method is a racemic mixture instead of an enantiomerically pure product, such that a chiral separation to remove the undesired D-form compound is still required. Further, *t*-BuLi used in the prior art is too inflammable and highly chemically active to be controlled, and the boronating agent used in the prior art is currently not commercially available. Accordingly, the method as disclosed in the prior art still has the drawbacks of low safety, low total yield, large time consumption, and failure of producing $^{10}B$-enriched L-BPA.

To overcome the shortcomings, the present invention provides a process for preparing L-BPA to mitigate or obviate the aforementioned problems. Given that the aforesaid drawbacks of the prior art such as large time consumption, multi-steps and additional pre-process for preparing the boronating agents, the main object of the present invention is to develop a timesaving, efficient, cost effective, and environmentally friendly process for preparing L-BPA without tedious purification. Accordingly, L-BPA prepared by the process of the present invention has high chemical purity and high optical purity.

Another main objective of the present invention is to develop a process for preparing L-$^{10}$BPA, particularly, a process for preparing L-$^{10}$BPA that is timesaving, efficient, cost effective, environmentally friendly, convenient and without tedious purification. The process in accordance with the present invention is effective in producing L-$^{10}$BPA with high chemical purity, high optical purity and high isotopic purity.

Another main objective of the present invention is to develop a process suitable for preparing both L-BPA and L-$^{10}$BPA; particularly, a process for preparing both L-BPA and L-$^{10}$BPA that is timesaving, efficient, cost effective, environmentally friendly, convenient and without tedious purification.

Accordingly, the process in accordance with the present invention comprises steps of:

> reacting N-protected (S)-4-halophenylalanine of formula (I), a boronating agent and an organolithium to obtain a reaction mixture, wherein the reaction mixture comprises N-protected (S)-4-boronophenylalanine of formula (II) and the R group represents a protection group;
>
> 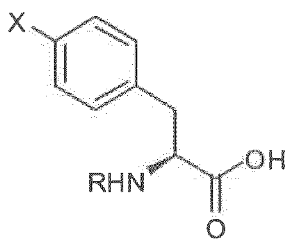 formula (I) 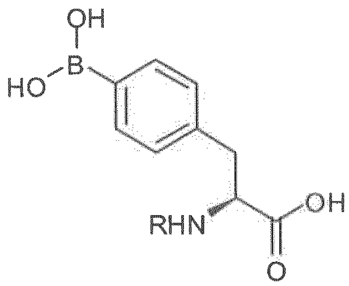 formula (II)
>
> isolating the N-protected (S)-4-boronophenylalanine from the reaction mixture; and

deprotecting the R group of the N-protected (S)-4-boronophenylalanine to obtain L-BPA, wherein the X group of N-protected (S)-4-halophenylalanine of formula (I) is iodide or bromide, the boronating agent includes tributyl borate, triethyl borate, trimethyl borate, triisopropyl borate, tripropyl borate, or tri-*tert*-butyl borate, and the organolithium is n-butyl lithium, methyl lithium, or sec-butyl lithium.

According to the present invention, the boronating agent has any isotopes of boron, such as $^{11}B$, $^{10}B$ or a mixture of $^{11}B$ and $^{10}B$.

According to the present invention, the boronating agent having the mixture of $^{11}B$ and $^{10}B$ has, but not limited to, a 19.9 % of $^{10}B$ purity.

The present invention provides a process for preparing 4-borono-L-phenylalanine with several advantages.

First, the present invention is a shortened process comprising a step of reacting N-protected (S)-4-halophenylalanine, a boronating agent and an organolithium to obtain the N-protected (S)-4-boronophenylalanine without protection the carboxylic acid group of N-protected (S)-4-halophenylalanine in advance, and thus deprotection of the carboxylic acid afterwards is no longer necessary. Moreover, the process in accordance with the present invention uses a boronating agent directly, and thus no additional pre-process is required for preparing the boronating agent. Also, with the simplification of process, L-BPA prepared by the process of the present invention has high chemical purity and high optical purity and an excellent overall yield. Hence, the process of the present invention is timesaving, efficient and cost effective.

More preferably, the X group of N-protected (S)-4-halophenylalanine of formula (I) is iodide.

Preferably, the R group of N-protected (S)-4-halophenylalanine of formula (I) and of the N-protected (S)-4-boronophenylalanine of formula (II) is selected from the group consisting of: *tert*-butoxycarbonyl (*t*-Boc) group, trityl (Trt) group, 3,5-dimethoxyphenylisopropoxycarbonyl (Ddz) group, 2-(4-Biphenyl)isopropoxycarbonyl (Bpoc) group and 2-nitrophenylsulfenyl (Nps) group. Said R groups can be easily removed from N-protected (S)-4-halophenylalanine of formula (I) and the N-protected (S)-4-boronophenylalanine of formula (II) by acid.

More preferably, the R group of N-protected (S)-4-halophenylalanine of formula (I) and of the N-protected (S)-4-boronophenylalanine of formula (II) is *tert*-butoxycarbonyl group (*t*-Boc).

According to the present invention, the advantages of *tert*-butoxycarbonyl group are as follows.

1. N-Boc-(S)-4-halophenylalanine is solid and thereby is easily handled during the process;
2. One of the starting materials of producing N-Boc-(S)-4-halophenylalanine, Di-*t*-butyl dicarbonate, is easily accessible and inexpensive, and hence the produced N-Boc-(S)-4-halophenylalanine is inexpensive and easily accessible as well;
3. After the *tert*-butoxycarbonyl group is deprotected, the *tert*-butoxycarbonyl group is decomposed into $CO_2$ and *t*-butanol, which are low hazardous chemicals, and thus the present invention is safe and involves little hazardous chemicals.

Preferably, the step of reacting N-protected (S)-4-halophenylalanine, a boronating agent and an organolithium to obtain a reaction mixture comprises reacting N-protected (S)-4-halophenylalanine, the boronating agent and the organolithium at a temperature ranging from -50°C to -100°C; and more preferably, at a temperature ranging from -70°C to -100°C.

Preferably, the equivalent ratio of the boronating agent to N-protected (S)-4-halophenylalanine ranges from 2 to 5. Preferably, the equivalent ratio of the organolithium to N-protected (S)-4-halophenylalanine is at least 3. More preferably, the equivalent ratio of the organolithium to N-protected (S)-4-halophenylalanine ranges from 3 to 10. More preferably, the equivalent ratio of the organolithium to N-protected (S)-4-halophenylalanine ranges from 3 to 5.

Preferably, the step of reacting N-protected (S)-4-halophenylalanine of formula (I), the boronating agent and the organolithium to obtain the reaction mixture comprises steps of:

mixing N-protected (S)-4-halophenylalanine of formula (I), a reaction solvent and the boronating agent to obtain a mixed solution;

adding an inert organic solution comprising the organolithium into the mixed solution, so as to obtain the reaction mixture. The inert organic solution is obtained by mixing the organolithium with an inert organic solvent, and contains organolithium and the inert organic solvent.

According to the present invention, the concentration of the organolithium comprised in the inert organic solution ranges from, but is not limited to, 1M to 3 M. More preferably, the concentration of the organolithium comprised in the inert organic solution ranges from, but is not limited to, 1M to 2 M.

Preferably, the step of adding the inert organic solution comprising the organolithium into the mixed solution, so as to obtain the reaction mixture comprises adding the inert organic solution into the mixed solution comprising the organolithium at a temperature ranging from -50°C to -100°C. More preferably, the temperature ranges from -70°C to -100°C. Even more preferably, the temperature ranges from -70°C to -85°C.

In view of the vigorous reaction between the mixed solution and the organolithium, the step of adding the inert organic solution comprising the organolithium into the mixed solution comprises adding the inert organic solution comprising the organolithium dropwise into the mixed solution. The time of adding the inert organic solution comprising the organolithium dropwise into the mixed solution depends on, but not limited to, the amount of the inert organic solution comprising the organolithium, the concentration of the organolithium comprised in the inert organic solution, and the amount of the mixed solution. For example, when the volume of the mixed solution ranges from 300 mL to 400mL and the volume of the inert organic solution ranges from 50 mL to 100mL, the time of adding the organolithium in the inert organic solution dropwise to the mixed solution is within 2 to 3 hours.

Since the reaction of the mixed solution and the organolithium is vigorous, the step of mixing N-protected (S)-4-halophenylalanine of formula (I), the reaction solvent and the boronating agent to obtain the mixed solution comprises mixing N-protected (S)-4-halophenylalanine, the reaction solvent and the boronating agent under nitrogen to obtain a mixed solution and the step of adding the inert organic solution comprising the organolithium solvent into the mixed solution comprises adding the inert organic solution comprising the organolithium solvent into the mixed solution under nitrogen, so as to obtain the reaction mixture.

Preferably, the step of isolating the N-protected (S)-4-boronophenylalanine from the reaction mixture comprises steps of:

adding an aqueous solution into the reaction mixture to obtain a first aqueous layer,
extracting the first aqueous layer with an extractive solvent to obtain a second aqueous layer;
adjusting the pH value of the second aqueous layer to less than 4 to crystallize the N-protected (S)-4-boronophenylalanine;
filtering the crystals of the N-protected (S)-4-boronophenylalanine and then drying the crystals of the N-protected (S)-4-boronophenylalanine, so as to obtain the N-protected (S)-4-boronophenylalanine from the second aqueous layer.

The step of adjusting the pH value of the second aqueous layer to less than 4 to crystallize the N-protected (S)-4-boronophenylalanine comprises a step of adjusting the pH value of the second aqueous layer to less than 4 by adding an acidic solution into the second aqueous layer to crystallize the N-protected (S)-4-boronophenylalanine, and more preferably, to adjust the pH value of the second aqueous layer to a range between 3 and 4.

According to the process, pure N-protected (S)-4-boronophenylalanine can be isolated from the reaction mixture and successfully obtained without any tedious purification. Therefore, the process of the present invention generates less amount of wasted solvent and no wasted silica gel, and thereby is more friendly to the environment.

Preferably, the step of deprotecting the R group of the N-protected (S)-4-boronophenylalanine to obtain L-BPA comprises steps of:

acidifying a first organic solution comprising the N-protected (S)-4-boronophenylalanine to deprotect the R group of N-protected (S)-4-boronophenylalanine, so as to obtain L-BPA. The first organic solution is obtained by mixing the N-protected (S)-4-boronophenylalanine with a first organic solvent.

According to the present invention, the step of acidifying a first organic solution comprising the N-protected (S)-4-boronophenylalanine to deprotect the R group of N-protected (S)-4-boronophenylalanine comprises steps of acidifying a first organic solution comprising the N-protected (S)-4-boronophenylalanine by adding an acidifying solution to deprotect the R group of N-protected (S)-4-boronophenylalanine, so as to obtain L-BPA.

According to the present invention, the step of acidifying a first organic solution comprising the N-protected (S)-4-boronophenylalanine to deprotect the R group of the N-protected (S)-4-boronophenylalanine to obtain L-BPA comprises steps of acidifying a first organic solution comprising the N-protected
(S)-4-boronophenylalanine to a pH value lower than pH 3, more preferably, to a pH value lower than 1, to deprotect the R group of the N-protected
(S)-4-boronophenylalanine, so as to obtain L-BPA.

Preferably, the step of deprotecting the R group of the N-protected (S)-4-boronophenylalanine to obtain L-BPA comprises steps of acidifying a first organic solution comprising the N-protected (S)-4-boronophenylalanine to deprotect the R group of the N-protected (S)-4-boronophenylalanine to obtain an acidic mixture; adjusting the pH value of the acidic mixture above 1 to crystallize L-BPA ; and filtering the crystals of L-BPA and then drying the crystals of L-BPA, so as to obtain L-BPA from the acidic mixture.

More preferably, the step of adjusting the pH value of the acidic mixture above 1 to crystallize L-BPA comprises adjusting the pH value of the acidic mixture within a range from pH 1 to 3; and continuously increasing the pH value of the acidic mixture till within a range from pH 5 to 7.4 to crystallize L-BPA.

More preferably, the step of adjusting the pH value of the acidic mixture to above 1 to crystallize L-BPA comprises adjusting the pH value of the acidic mixture within a range from pH 1 to 3; allowing the acidic mixture to stand for a period of time; and continuously increasing the pH value of the acidic mixture till within a range from pH 5 to 7.4 to crystallize L-BPA.

More preferably, the step of adjusting the pH value of the acidic mixture to above pH 1 to crystallize L-BPA comprises adjusting the pH value of the acidic mixture within a range starting from pH 1.5; allowing the acidic mixture to stand for a period of time; and continuously increasing the pH value of the acidic mixture till to pH 6.2 to crystallize L-BPA.

According to the present invention, the period of time includes, but is not limited to, 0.5 hour and 1 hour, which is for growing more solids of L-BPA.

Accordingly, the step of deprotecting the R group of the N-protected (S)-4-boronophenylalanine to obtain L-BPA is simplified and without tedious purification, and the obtained L-BPA is with high chemical purity and high optical purity. Therefore, the present invention provides a simplified process without tedious purification, thereby avoiding a waste of solvent and silica gel. Thus, the present invention is environmentally friendly.

Preferably, the boronating agent has a $^{10}B$ purity not less than 98%.

Preferably, the 4-borono-L-phenylalanine is 4-($^{10}B$)borono-L-phenylalanine.

Preferably, the N-protected (S)-4-boronophenylalanine of formula (II) is N-protected(S)- 4-($^{10}B$)boronophenylalanine.

According to the present invention, the boronating agent includes trialkyl $^{10}B$ borate and any other suitable agent containing a 99 % of $^{10}B$ purity. Trialkyl $^{10}B$ borate includes, but is not limited to $^{10}B(OBu)_3$and $^{10}B(OMe)_3$. More preferably, the $^{10}B$ boronating agent is commercially available.

The process according to the present invention is also suitable for preparing 4-($^{10}B$)borono-L-phenylalanine without additional pre-process for preparing the boronating agent. Besides, the present invention provides 4-($^{10}B$)borono-L-phenylalanine with high chemical purity, with high optical purity, with high isotopic purity and an excellent overall yield due to the shortened and simplified process, and the present invention has the same advantages of being timesaving, efficient, cost effective, without tedious purification, and environmental friendly as mentioned above.

According to the present invention, the reaction solvent includes, but is not limited to, ether-type solvent and any other suitable organic solvent. The ether-type solvent applicable in the present invention includes, but is not limited to, tetrahydrofuran, 2-methyltetrahydrofuran, ethyl ether, and any other suitable ether-type solvent. More preferably, the reaction solvent is an ether-type solvent. More preferably, the reaction solvent is tetrahydrofuran or 2-methyltetrahydrofuran.

According to the present invention, the inert organic solvent refers to organic material in which the organolithium is at least partially soluble and which is chemically inert to the organolithium, N-protected (S)-4-halophenylalanine of formula (I), and the boronating agent. The inert organic solvent includes, but is not limited to, alkanes, ether-type solvents and any other suitable organic solvent. The alkanes include, but are not limited to, hexanes, heptane, cyclohexane, pentane, and any other suitable alkanes. The ether-type solvents include, but are not limited to, tetrahydrofuran, diethyl ether, diethoxymethane, dibutyl ether, 2-methyltetrahydrofuran and any other suitable ether-type solvents.

According to the present invention, the extractive solvent refers to any solvent substantially immiscible with water or slightly immiscible with water.

The extractive solvent includes, but is not limited to, isobutyl alcohol, toluene, n-butyl alcohol, isopropyl acetate, ethyl acetate, and any other suitable extractive solvent.

According to the present invention, the acidic solution includes, but is not limited to, hydrochloric acid solution and any other suitable acidic solution.

According to the present invention, the first organic solvent includes, but is not limited to, acetone, tetrahydrofuran, dioxane, and any other suitable organic solvent. More preferably, the first organic solvent is acetone.

According to the present invention, the acidifying solution includes, but is not limited to, hydrochloric acid in dichloromethane, trifluoroacetic acid in dichloromethane, methanesulfonic acid in dioxane, trimethylsilyl chloride in dichloromethane. More preferably, the acidifying solution is a solution comprising hydrochloric acid.

Other objectives, advantages and novel features of the invention will become more apparent from the following detailed description when taken in conjunction with the accompanying drawings.

## IN THE DRAWINGS

Fig.1 is a chemical equation illustrating an embodiment of the invention.

The present invention provides solutions to solve the problems of the conventional processes for preparing L-BPA. A process for preparing L-BPA from (S)-N-Boc-4-iodophenylalanine is provided as a preferred embodiment of (S)-N-Boc-4-halophenylalanine for illustrating but not limiting the scope of the present invention.

For a better understanding about the technical features of the present invention and its effect, and for implements in accordance with the disclosures of the specification, preferred embodiment, details and figures are further shown as follows.

The materials and conditions involved in the embodiments of the present invention are:

(S)-N-Boc-4-iodophenylalanine, with a purity not less than 96.8%.

The reaction solvent: 2-methyltetrahydrofuran.
The boronating agent: tributyl borate or $^{10}B$ tributyl borate.

The organolithium is n-butyl lithium.

The inert organic solvent is hexanes.

The concentration of the organolithium comprised in hexanes is 1.6 M.

The extractive solvent is isobutyl alcohol.

The acidic solution is hydrochloric acid.

The equivalent ratio of the boronating agent to (S)-N-Boc-4-halophenylalanine is 3.5.

The equivalent ratio of the organolithium to (S)-N-Boc-4-halophenylalanine is 4.25.

The first organic solvent is acetone.

The acidifying solution is a solution comprising hydrochloric acid.

The present invention is environmentally friendly and reduces cost remarkably since 2-methyltetrahydrofuran, isobutyl alcohol and acetone are nontoxic and are environmentally friendly solvent and since 2-methyltetrahydrofuran can be recycled after use.

**Embodiment 1**

**Preparation of (S)-N-Boc-4-boronophenylalanine from (S)-N-Boc-4-iodophenylalanine**

With reference to Fig. 1, a 1-L, three-necked flask equipped with a mechanical stirrer, a thermometer, and a nitrogen inlet adaptor capped with a rubber septum was charged with 2-methyltetrahydrofuran(150 mL), and followed by (S)-N-Boc-4-iodophenylalanine (10.0 g, 96.8 %, 24.7 mmol), stirred to form a solution, and added tributyl borate (21 mL, 17.9g, 77.8 mmol) to form a mixed solution. The mixed solution was cooled to a temperature ranging from -76°C to - 85°C, and n-butyl lithium (1.6 M in hexanes, 68 mL, 109 mmol) was added dropwise to the mixed solution over 2.5 h to form a reaction mixture. After the addition, a quenched sample of the reaction mixture was analyzed by HPLC and the starting (S)-N-Boc-4-iodophenylalanine was found less than 0.5 %. The reaction was quenched slowly with 180 mL of cold water over a 30 min period, then allowed to warm to a temperature ranging from 5°C to 10°C. The resulted mixture was stirred for 10 to 20 minutes, and then was filtered to remove the insoluble material, washed with 20 mL of water, combined with the water wash to the filtrate and transferred to a separating funnel. The basic lower aqueous layer was separated to obtain a first aqueous layer. The first aqueous layer was extracted with isobutyl alcohol, and was separated from the isobutyl alcohol to obtain a second aqueous layer. The temperature of the second aqueous layer was adjusted to 20°C to 25 °C, and the pH value of the second aqueous layer was adjusted to pH 3 to pH 4 by using 37 % of hydrochloric acid. The product (S)-N-Boc-4-boronophenylalanine started to precipitate during this period. The second aqueous layer mixture was stirred for 30 min, the pH value of the second aqueous layer mixture was readjusted to pH 3.0 and the second aqueous layer mixture was stirred for another 2 hours at a temperature ranging from 20 to 25°C. The second aqueous layer mixture was filtered to obtain solid (S)-N-Boc-4-boronophenylalanine, which was washed twice with 20 mL of water and dried in a vacuum oven at 50°C for a minimum of 5 hours to a loss on drying(LOD) of less than 0.5 % to afford 5.1 g of (S)-N-Boc-4-boronophenylalanine as white solid, which was 98.8 % pure determined by HPLC. The yield was 66 %.

The melting point, specific rotation, $^1H$ NMR data, $^{13}C$ NMR data, IR data and MS data of the obtained (S)-N-Boc-4-boronophenylalanine are as follows.

Melting point: 150°C (decomp.), determined by Electrothermal 9100; $[\alpha]_D^{25}$:+13.5° (c= 0.5, MeOH);

$^1H$ NMR (500 MHz, DMSO-$d_6$) $\delta$ 8.0 (singlet (s), 2H), 7.7 (doublet (d), J = 7.8 Hz, 2H), 7.2 (d, J = 7.8 Hz, 2H), 7.0 (d, J = 8.4 Hz, 2H), 4.1 (multiplet (m), 1H), 3.0 (doublet of doublets (dd), J = 13.8, 4.5 Hz, 1H), 2.8 (dd, J = 13.7, 10.3 Hz, 1H), 1.3 (s, 9H);

$^{13}C$ NMR (125 MHz, DMSO-$d_6$) $\delta$ 173.63, 155.48, 139.96, 134.06, 131.96, 128.18, 78.13, 55.06, 36.53, 28.19;

IR(KBr) $\nu_{max}$: 3328, 2979, 1716, 1689, 1537, 1370, 1345, 1332, 1285, 1165, 1040 $cm^{-1}$; and

ESI (+)-MS m/z = 332.0 $(M+ Na)^+$.

**Preparation of 4-borono-L-phenylalanine (L-BPA) from (S)-N-Boc-4-boronophenylalanine**

A suspension of (S)-N-Boc-4-boronophenylalanine(5.63 g, 98.5% pure, 17.9 mmol) in a mixture of acetone (34 ml) and water (3.8 ml) was stirred and added hydrochloric acid (37 %, 3.8 ml) to form an acidic mixture, and the acidic mixture was stirred at 55°C for 1.5 h. HPLC analysis of the acidic mixture showed the completion of the reaction. The acidic mixture was cooled to room temperature, and the pH value of the acidic mixture was adjusted to pH 1.5 by using sodium hydroxide aqueous solution. The acidic mixture was stirred for 30 min, and the product 4-borono-L-phenylalanine started to precipitate during this period. The pH value of the acidic mixture was readjusted to pH 6.2 by using sodium hydroxide aqueous solution, and the acidic mixture was stirred overnight at room temperature. The acidic mixture was filtered to obtain solid 4-borono-L-phenylalanine. The solid
4-borono-L-phenylalanine was washed with water, then with 50 % aqueous acetone, and dried in a vacuum oven at 80°C for a minimum of 6 hours to constant weight to afford 3.51 g (93.2% yield) of 4-borono-L-phenylalanine with 99.6

% pure as white crystals. The obtained 4-borono-L-phenylalanine was analyzed by chiral HPLC, indicating the ratio of L to D isomers to be 100 to 0 (100 % enantiometric excess).

The melting point, specific rotation, 1H NMR data, 13C NMR data, IR data and MS data of the obtained L-BPA are as follows.

Melting point: 275 to 280 °C (decomp.); $[\alpha]_D^{25}$ :- 4.7°(c= 0.5, 1M HCl);

$^1$H NMR (500 MHz, $D_2O$, $CF_3COOD$): δ 7.2 (d, *J* = 7.9 Hz, 2H), 6.8 (d, *J* = 8.0 Hz, 2H), 3.9 (dd, *J* = 7.8, 5.7 Hz, 1H), 2.9 (dd, *J* = 14.6, 5.6 Hz, 1H), 2.7 (dd, *J* = 14.6, 7.9 Hz, 1 H);

$^{13}$C NMR (125 MHz, $D_2O$, $CF_3COOD$):δ 171.81, 137.31, 135.16, 132.42, 129.65, 54.64, 36.32;

IR(KBr)$\nu_{max}$: 3585, 3148, 3039, 2914, 1636, 1610, 1505, 1411, 1388, 1344, 1080, 714 $cm^{-1}$; and

LC- ESI (+)-MS $(M+ Na)^+$ = m/z 232.0.

**Embodiment 2**

**Preparation of (S)-N-Boc-4-($^{10}$B) boronophenylalanine from (S)-N-Boc-4-iodophenylalanine**

Set up a 3-L, three-necked flask equipped with a mechanical stirrer, a thermometer, and a nitrogen inlet adaptor capped with a rubber septum. Charged the flask with 2-methyltetrahydrofuran (750 mL), followed by (S)-N-Boc-4-iodophenylalanine (50.0 g, 100% pure, 128 mmol), stirred to form a solution, and added tributyl $^{10}$B borate (106 mL, 90.1 g, 393 mmol) to form a mixed solution. The mixed solution was cooled to a temperature ranging from -76°C to -85°C, and n-butyl lithium (1.6 M in hexanes, 375 ml, 600 mmol) was added dropwise to the mixed solution over 3 h to form a reaction mixture.

After the addition, the reaction mixture was stirred for an additional 0.5 h at - 80 °C. HPLC analysis of a quenched sample of the reaction mixture showed the starting material (S)-N-Boc-4-iodophenylalanine was less than 0.5 %. The reaction mixture was quenched slowly with 900 mL of cold water over 15 to 20 minutes, then allowed to warm to a temperature ranging from 5°C to 10 °C. The resulted mixture was filtered to remove insoluble solid, and 100 mL of water was adopted for transfer and rinse. The obtained filtrate was transferred to a separating funnel to separate the layers, the basic lower aqueous layer was separated to obtain a first aqueous layer. The first aqueous layer was extracted with isobutyl alcohol and then separated from the isobutyl alcohol to obtain a second aqueous layer.

The pH value of the second aqueous layer was adjusted to pH 3 to pH 4 by using 37 % hydrochloric acid at a temperature ranging from 20°C to 25 C, the product (S)-N-Boc-4-($^{10}$B) boronophenylalanine started to precipitate during this period. The second aqueous layer mixture was stirred for 30 minutes, then the pH value of the second aqueous layer mixture was further adjusted to 3.0 and then the second aqueous layer mixture was stirred for another 2 hours. The second aqueous layer mixture was filtered to obtain solid (S)-N-Boc-4-($^{10}$B) boronophenylalanine, which was then washed twice with water and dried in a vacuum oven at 50°C for a minimum of 4 hours to an LOD of less than 0.5 % to afford 25.8 g of (S)-N-Boc-4-($^{10}$B) boronophenylalanine as white solid, which was 99.6 % pure determined by HPLC. The yield was 65.1 %.

The melting point, specific rotation, $^1$H NMR data, $^{13}$C NMR data, IR data and MS data of the obtained (S)-N-Boc-4-($^{10}$B) boronophenylalanine are as follows.

Melting point: 150°C (decomp.); $[\alpha]_D^{25}$ :+14°(c= 0.5, MeOH) ;

$^1$H NMR:(500 MHz, DMSO-$d_6$):5 8.0 (s, 2H), 7.7 (d, J = 7.7 Hz, 2H), 7.2 (d, J = 7.6 Hz, 2H), 7.0 (d, J = 8.4 Hz, 2H), 4.1 (m, 1H), 3.0 (dd, J = 13.8, 4.5 Hz, 1H), 2.8 (dd, J = 13.7, 10.3 Hz, 1H), 1.3 (s, 9H);

$^{13}$C NMR (125 MHz, DMSO-$d_6$) δ 173.63, 155.48, 139.96, 134.06, 131.94, 128.18, 78.13, 55.06, 36.53, 28.19;

IR (KBr) $\nu_{max}$: 3331, 2979, 1717, 1689, 1537, 1399, 1372, 1365, 1285, 1165, 1045 $cm^{-1}$; and

HRMS (ESI): calculated for $C_{14}H_{20}{}^{10}BNO_6$ $[M-H]^-$ 307.1420, found 307.1333.

**Preparation of 4-($^{10}$B)borono-L-phenylalanine (L-($^{10}$B) BPA) from (S)-N-Boc-4-($^{10}$B)boronophenylalanine**

A suspension of (S)-N-Boc-4-($^{10}$B) boronophenylalanine (20.5g, 99.6 % pure, 66.2 mmol) in a mixture of acetone (122 ml) and water (14 ml) was stirred at room temperature and added hydrochloric acid (37 %, 14 ml) to form an acidic mixture, the acidic mixture was stirred at 55 °C for 1.5 to 2 hours. HPLC analysis of the acidic mixture showed the completion of the reaction. The temperature of the acidic mixture was cooled to room temperature, and the pH value of the acidic mixture was adjusted to pH 1.5 by using sodium hydroxide aqueous solution, 4-($^{10}$B)borono-L-phenylalanine started to precipitate during this period, and the acidic mixture was stirred for 50 min. The pH value of the acidic mixture was readjusted to pH 6.2 by using sodium hydroxide aqueous solution, and the mixture was stirred for a minimum of 25 minutes at room temperature. The acidic mixture was filtered to obtain solid 4-($^{10}$B)borono-L-phenylalanine. The solid

4-($^{10}$B)borono-L-phenylalanine was washed with 50 % aqueous acetone, followed by an acetone rinse, dried in a vacuum oven at 80 °C for a minimum of 6 hours to constant weight to afford 13.3 g (96.4% yield) of 4-($^{10}$B)borono-L-phenylalanine with 99.9 % pure as white crystals, and was analyzed by chiral HPLC, indicating the ratio of L to D isomers to be 100 to 0 (100 % enantiometric excess).

The melting point, specific rotation, $^1$H NMR data, $^{13}$C NMR data, IR data, ICP-MS data and HRMS data of the obtained L-($^{10}$B) BPA are as follows.

Melting point: 275 to 280°C (decomp.);
[ $\alpha$]25D:-5.4°(c=0.5, 1M HCl);
1 H NMR (500 MHz, D2 O, CF3COOD):$\delta$ 7.2 (d, J = 8.0 Hz, 2H), 6.8 (d, J = 8.0 Hz, 2H), 3.9 (dd, J = 7.8, 5.7 Hz, 1 H), 2.8 (dd, J = 14.6, 5.6 Hz, 1 H), 2.7 (dd, J = 14.6, 7.9 Hz, 1H);
$^{13}$C NMR: (125 MHz, $D_2O$, $CF_3COOD$):$\delta$ 171.80, 137.31, 135.16, 132.37, 129.65, 54.64, 36.32;
IR(KBr) $\nu_{max}$: 3585, 3148, 3038, 2923, 1636, 1610, 1507, 1410, 1398, 1345, 1085, 716 cm$^{-1}$.
ICP-MS measurements for $^{10}$B content is higher than 99.4 (w/w %), wherein $^{10}$B is compared to $^{11}$B; and
HRMS (ESI): calculated for $C_9H_{13}10BNO_4$, $[M+H]^+$ 209.0974, found 209.0970.

## Claims

1. A process for preparing 4-borono-L-phenylalanine, **characterized in that** the process comprises steps of:

    reacting N-protected (S)-4-halophenylalanine of formula (I), a boronating agent and an organolithium to obtain a reaction mixture, wherein the reaction mixture comprises N-protected (S)-4-boronophenylalanine of formula (II) and the R group represents a protection group;

    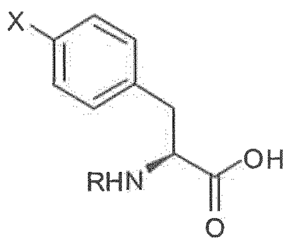 formula (I) 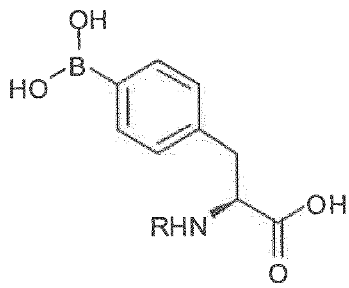 formula (II);

    isolating the N-protected (S)-4-boronophenylalanine from the reaction mixture; and
    deprotecting the R group of the N-protected (S)-4-boronophenylalanine to obtain 4-borono-L-phenylalanine (L-BPA),

    wherein the X group of N-protected (S)-4-halophenylalanine of formula (I) is iodide or bromide, the boronating agent includes tributyl borate, triethyl borate, trimethyl borate, triisopropyl borate, tripropyl borate, or tri-*tert*-butyl borate, and the organolithium is n-butyl lithium, methyl lithium, or sec-butyl lithium.

2. The process according to claim 1, wherein the R group of N-protected (S)-4-halophenylalanine of formula (I) and the N-protected (S)-4-boronophenylalanine of formula (II) is selected from the group consisting of: *tert*-butoxycarbonyl (*t*-Boc) group, trityl (Trt) group, 3,5-dimethoxyphenylisopropoxycarbonyl (Ddz) group, 2-(4-Biphenyl)isopropoxycarbonyl (Bpoc) group, and 2-nitrophenylsulfenyl (Nps) group.

3. The process according to claim 1,wherein the step of reacting N-protected (S)-4-halophenylalanine of formula (I), the boronating agent and the organolithium to obtain the reaction mixture comprises reacting N-protected (S)-4-halophenylalanine of formula (I), the boronating agent and the organolithium at a temperature ranging from -50°C to -100°C to obtain the reaction mixture.

4. The process according to claim 1, wherein the step of reacting N-protected (S)-4-halophenylalanine of formula (I), the boronating agent and the organolithium to obtain the reaction mixture comprises:

    reacting N-protected (S)-4-halophenylalanine of formula (I), the boronating agent and the organolithium with

an equivalent ratio of the boronating agent to N-protected (S)-4-halophenylalanine ranging from 2 to 5, so as to obtain the reaction mixture.

**5.** The process according to claim 1, wherein the step of reacting N-protected (S)-4-halophenylalanine of formula (I), the boronating agent and the organolithium to obtain the reaction mixture comprises:

reacting N-protected (S)-4-halophenylalanine of formula (I), the boronating agent and the organolithium with an equivalent ratio of the organolithium to N-protected (S)-4-halophenylalanine being at least 3.

**6.** The process according to claim 1, wherein the step of reacting N-protected (S)-4-halophenylalanine of formula (I), the boronating agent and the organolithium to obtain the reaction mixture comprises steps of:

mixing N-protected (S)-4-halophenylalanine, a reaction solvent and the boronating agent to obtain a mixed solution; and
adding an inert organic solution comprising the organolithium into the mixed solution at a temperature ranging from -50°C to -100°C, so as to obtain the reaction mixture.

**7.** The process according to claim 1, wherein the step of isolating the N-protected (S)-4-boronophenylalanine from the reaction mixture comprises steps of :

adding an aqueous solution into the reaction mixture to obtain a first aqueous layer,
extracting the first aqueous layer with an extractive solvent to obtain a second aqueous layer, and
adjusting the pH value of the second aqueous layer to less than 4 to crystallize the N-protected (S)-4-boronophenylalanine, so as to obtain the N-protected (S)- 4-boronophenylalanine from the second aqueous layer.

**8.** The process according to claim 1, wherein the step of deprotecting the R group of the N-protected (S)-4-boronophenylalanine to obtain L-BPA comprises a step of: acidifying a first organic solution comprising the N-protected (S)-4-boronophenylalanine to deprotect the R group of the N-protected (S)-4-boronophenylalanine to obtain L-BPA.

**9.** The process according to claim 1, wherein the step of deprotecting the R group of the N-protected (S)-4-boronophenylalanine to obtain L-BPA comprises steps of:

acidifying a first organic solution comprising the N-protected (S)-4-boronophenylalanine to deprotect the R group of the N-protected (S)-4-boronophenylalanine to obtain an acidic mixture; and
adjusting the pH value of the acidic mixture to above 1 to crystallize L-BPA, so as to obtain L-BPA from the acidic mixture.

**10.** The process according to claim 1, wherein the boronating agent has a $^{10}B$ purity not less than 98%, and the 4-borono-L-phenylalanine is 4-($^{10}B$)borono-L-phenylalanine, and the N-protected (S)-4-boronophenylalanine of formula (II) is N-protected (S)-4-($^{10}B$)boronophenylalanine.

**11.** The process according to claim 10, wherein the R group of N-protected (S)-4-halophenylalanine of formula (I) and the N-protected (S)-4-($^{10}B$)boronophenylalanine of formula (II) is selected from the group consisting of *tert*-butoxycarbonyl group, trityl group, 3,5-dimethoxyphenylisopropoxycarbonylgroup, 2-(4-Biphenyl)isopropoxycarbonyl group, and 2-nitrophenylsulfenyl group.

**12.** The process according to claim 10,wherein the step of reacting N-protected (S)-4-halophenylalanine, the boronating agent and the organolithium to obtain a reaction mixture comprises reacting N-protected (S)-4-halophenylalanine, the boronating agent and the organolithium at a temperature ranging from -50°C to -100°C to obtain the reaction mixture.

**13.** The process according to claim 10, wherein the step of reacting N-protected (S)-4-halophenylalanine of formula (I), the boronating agent and the organolithium to obtain the reaction mixture comprises:

reacting N-protected (S)-4-halophenylalanine of formula (I), the boronating agent and the organolithium with an equivalent ratio of the boronating agent to N-protected (S)-4-halophenylalanine of formula (I) ranging from 2 to 5.

**14.** The process according to claim 10, wherein the step of reacting N-protected (S)-4-halophenylalanine of formula (I), the boronating agent and the organolithium to obtain the reaction mixture comprises:

reacting N-protected (S)-4-halophenylalanine of formula (I), the boronating agent and the organolithium with an equivalent ratio of the organolithium to N-protected (S)-4-halophenylalanine of formula (I) being at least 3.

**15.** The process according to claim 10, wherein the step of reacting N-protected (S)-4-halophenylalanine, the boronating agent, and the organolithium to obtain the reaction mixture comprises steps of :

mixing N-protected (S)-4-halophenylalanine, a reaction solvent and the boronating agent to obtain a mixed solution; and
adding an inert organic solution comprising the organolithium into the mixed solution at a temperature ranging from -50°C to -100°C, so as to obtain the reaction mixture.

**16.** The process according to claim 10, wherein the step of isolating the N-protected (S)-4-($^{10}$B)boronophenylalanine from the reaction mixture comprises steps of:

adding an aqueous solution to the reaction mixture to obtain a first aqueous layer,
extracting the first aqueous layer with an extractive solvent to obtain a second aqueous layer, and
adjusting the pH value of the second aqueous layer to less than 4 to crystallize the N-protected (S)-4-($^{10}$B)boronophenylalanine, so as to obtain the N-protected (S)-4-($^{10}$B)boronophenylalanine from the second aqueous layer.

**17.** The process according to claim 10, wherein the step of deprotecting the R group of the N-protected (S)- 4-($^{10}$B)boronophenylalanine to obtain 4-($^{10}$B)borono-L-phenylalanine comprises a step of acidifying a first organic solution comprising the N-protected (S)- 4-($^{10}$B)boronophenylalanine to deprotect the R group of the N-protected (S)-4-($^{10}$B)boronophenylalanine to obtain 4-($^{10}$B)borono-L-phenylalanine.

**18.** The process according to claim 10, wherein the step of deprotecting the R group of the N-protected (S)-4-($^{10}$B)boronophenylalanine to obtain 4-($^{10}$B)borono-L-phenylalanine comprises steps of:

acidifying a first organic solution comprising the N-protected (S)-4-($^{10}$B)boronophenylalanine to deprotect the R group of the N-protected (S)- 4-($^{10}$B)boronophenylalanine to obtain an acidic mixture; and

adjusting the pH value of the acidic mixture to above 1 to crystallize the 4-($^{10}$B)borono-L-phenylalanine so as to obtain 4-($^{10}$B)borono-L-phenylalanine from the acidic mixture.

**Patentansprüche**

**1.** Verfahren für die Herstellung eines 4-Bor-L-phenylalanins, **dadurch gekennzeichnet, dass** das Verfahren die Schritte umfasst des:

Reagierens von N-geschütztem (S)-4-Halophenylalanin der Formel (I), einem Boronierungsmittel und einem Organolithium, um eine Reaktionsmischung zu erhalten, wobei die Reaktionsmischung N-geschütztes (S)-4-Borphenylalanin der Formel (II) umfasst und die R-Gruppe eine Schutzgruppe darstellt;

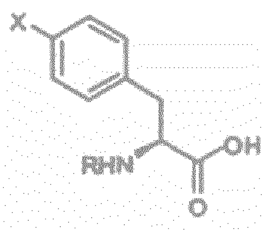
Formel (I)

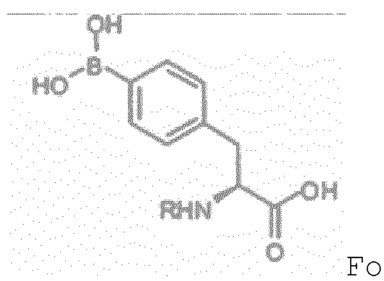
Formel (II)

Isolierens des N-geschützten (S)-4-Borphenylalanins von der Reaktionsmischung; und

Entschützens der R-Gruppe des N-geschützten(S)-4-Borphenylalanins, um 4-Bor-L-phenylalanin (L-BPA) zu erhalten,

wobei die X-Gruppe von N-geschütztem (S)-4-Halophenylalanin der Formel (I) Iodid oder Bromid ist, das Boronierungsmittel Tributylborat, Triethylborat, Trimethylborat, Triisopropylborat, Tripropylborat oder Tri-tert-butylborat umfasst und das Organolithium n-Butyllithium, Methyllithium oder sec-Butyllithium ist.

**2.** Verfahren nach Anspruch 1, wobei die R-Gruppe des N-geschützten (S)-4-Halophenylalanins der Formel (I) und das N-geschützte (S)-4-Borphenylalanin der Formel (II) aus der Gruppe ausgewählt sind bestehend aus: einer tert.-Butoxycarbonyl- (t-Boc) Gruppe, Trityl- (Trt) Gruppe, 3,5-Dimethoxyphenylisopropoxycarbonyl- (Ddz) Gruppe, 2-(4-Bipenyl)isopropoxycarbonyl- (Bpoc) Gruppe und 2-Nitrophenylsulfenyl- (Nps) Gruppe.

**3.** Verfahren nach Anspruch 1, wobei der Schritt des Reagierens von N-geschütztem (S)-4-Halophenylalanin der Formel (I), des Boronierungsmittels und des Organolithiums, um die Reaktionsmischung zu erhalten, das Reagieren von N-geschütztem(S)-4-Halophenylalanin der Formel (I), des Boronierungsmittels und des Organolithiums in einem Temperaturbereich von -50 °C bis -100 °C umfasst, um die Reaktionsmischung zu erhalten:

**4.** Verfahren nach Anspruch 1, wobei der Schritt des Reagierens von N-geschütztem (S)-4-Halophenylalanin der Formel (I), des Boronierungsmittels und des Organolithiums, um die Reaktionsmischung zu erhalten, Folgendes umfasst:

das Reagieren von N-geschütztem (S)-4-Halophenylalanin der Formel (I), des Boronierungsmittels und des Organolithiums mit einem äquivalenten Verhältnis des Boronierungsmittels zum N-geschützten (S)-4-Halophenylalanin im Bereich von 2 bis 5, um die Reaktionsmischung zu erhalten.

**5.** Verfahren nach Anspruch 1, wobei der Schritt des Reagierens von N-geschütztem (S)-4-Halophenylalanin der Formel (I), des Boronierungsmittels und des Organolithiums, um die Reaktionsmischung zu erhalten, Folgendes umfasst:

das Reagieren von N-geschütztem (S)-4-Halophenylalanin der Formel (I) des Boronierungsmittels und des Organolithiums mit einem äquivalenten Verhältnis des Organolithiums zum N-geschützten (S)-4-Halophenylalanin, das mindestens 3 beträgt.

**6.** Verfahren nach Anspruch 1, wobei der Schritt des Reagieren von N-geschütztem (S)-4-Halophenylalanin der Formel (I), des Boronierungsmittels und des Organolithiums, und die Reaktionsmischung zu erhalten, die Schritte umfasst des:

Mischens von N-geschütztem (S)-4-Halophenylalanin, einem Reaktionslösungsmittel und des Boronierungsmittels, um eine gemischte Lösung zu erhalten; und
Zugebens einer inerten organischen Lösung umfassend das Organolithium zu der gemischten Lösung bei einer Temperatur im Bereich von -50 °C bis -100 °C, um die Reaktionsmischung zu erhalten.

**7.** Verfahren nach Anspruch 1, wobei der Schritt des Isolierens des N-geschützten (S)-4-Borphenylalanins von der Reaktionsmischung die Schritte umfasst des:

Zugebens einer wässrigen Lösung zu der Reaktionsmischung, um eine erste wässrige Schicht zu erhalten,
Extrahierens der ersten wässrigen Schicht mit einem extraktiven Lösungsmittel, um eine zweite wässrige Schicht zu erhalten, und
Einstellens des pH-Werts der zweiten wässrigen Schicht auf weniger als 4, um das N-geschützte (S)-4-Borphenylalanin zu kristallisieren, um das N-geschützte (S)-4-Borphenylalanin aus der zweiten wässrigen Schicht zu erhalten.

**8.** Verfahren nach Anspruch 1, wobei der Schritt des Entschützens der R-Gruppe des N-geschützten (S)-4-Borphenylalanins, um L-BPA zu erhalten, einen Schritt umfasst des: Ansäuerns einer ersten organischen Lösung umfassend das N-geschützte (S)-4-Borphenylalanin, um die R-Gruppe des N-geschützten (S)-4-Borphenylalanins zu entschützen, um L-BPA zu erhalten.

**9.** Verfahren nach Anspruch 1, wobei der Schritt des Entschützens der R-Gruppe des N-geschützten (S)-4-Borphenylalanins, um L-BPA zu erhalten, die Schritte umfasst des:

Ansäuerns einer ersten organischen Lösung umfassend das N-geschützte (S)-4-Borphenylalanin, um die R-Gruppe des N-geschützten (S)-4-Borphenylalanins zu entschützen, um eine saure Mischung zu erhalten; und
Einstellens des pH-Werts der sauren Mischung auf über 1, um L-BPA zu kristallisieren, um L-BPA aus der sauren Mischung zu erhalten.

**10.** Verfahren nach Anspruch 1, wobei das Boronierungsmittel eine $^{10}B$Reinheit von nicht weniger als 98 % aufweist und das 4-Bor-L-phenylalanin 4-($^{10}B$)Bor-L-phenylalanin ist und das N-geschützte (S)-4-Borphenylalanin der Formel (II) N-geschütztes (S)-4-($^{10}B$)Borphenylalanin ist.

**11.** Verfahren nach Anspruch 10, wobei die R-Gruppe des N-geschützten (S)-4-Halophenylalanins der Formel (I) und das N-geschützte 4-($^{10}B$)Bor-L-phenylalanin der Formel (II) aus der Gruppe ausgewählt sind bestehend aus einer tert.-Butoxycarbonylgruppe, Tritylgruppe, 3,5-Dimethoxyphenylisopropoxycarbonylgruppe, 2-(4-Bipenyl)isopropoxycarbonylgruppe und 2-Nitrophenylsulfenylgruppe.

**12.** Verfahren nach Anspruch 10, wobei der Schritt des Reagierens von N-geschütztem (S)-4-Halophenylalanin, des Boronierungsmittels und des Organolithiums, um eine Reaktionsmischung zu erhalten, das Reagieren umfasst des N-geschützten (S)-4-Halophenylalanins, des Boronierungsmittels und des Organolithiums bei einer Temperatur im Bereich von -50 °C bis -100 °C, um die Reaktionsmischung zu erhalten.

**13.** Verfahren nach Anspruch 10, wobei der Schritt des Reagierens von N-geschütztem (S)-4-Halophenylalanin der Formel (I), des Boronierungsmittels und des Organolithiums, um die Reaktionsmischung zu erhalten, Folgendes umfasst:

das Reagieren von N-geschütztem (S)-4-Halophenylalanin mit einem äquivalenten Verhältnis des Boronierungsmittels zu N-geschütztem (S)-4-Halophenylalanin im Bereich von 2 bis 5 liegt, um die Reaktionsmischung zu erhalten.

**14.** Verfahren nach Anspruch 10, wobei der Schritt des Reagierens von N-geschütztem (S)-4-Halophenylalanin der Formel (I), des Boronierungsmittels und des Organolithiums um die Reaktionsmischung zu erhalten, Folgendes umfasst:

das Reagieren von N-geschütztem (S)-4-Halophenylalanin der Formel (I) des Boronierungsmittels und des Organolithiums mit einem äquivalenten Verhältnis des Organolithiums zu N-geschütztem (S)-4-Halophenylalanin der Formel (I), das mindestens 3 beträgt.

**15.** Verfahren nach Anspruch 10, wobei der Schritt des Reagierens von N-geschütztem (S)-4-Halophenylalanin, des Boronierungsmittels und des Organolithiums, um die Reaktionsmischung zu erhalten, die Schritte umfasst des:

Mischens von N-geschütztem (S)-4-Halophenylalanin, einem Reaktionslösungsmittel und dem Boronierungsmittel, um eine gemischte Lösung zu erhalten; und
Zugebens einer inerten organischen Lösung umfassend das Organolithium zu der gemischten Lösung bei einer Temperatur im Bereich von -50 °C bis -100 °C, um die Reaktionsmischung zu erhalten.

**16.** Verfahren nach Anspruch 10, wobei der Schritt des Isolierens des N-geschützten (S)-4-($^{10}B$)Borphenylalanins von der Reaktionsmischung die Schritte umfasst des:

Zugebens einer wässrigen Lösung zu der Reaktionsmischung, um eine erste wässrige Schicht zu erhalten,
Extrahierens der ersten wässrigen Schicht mit einem extraktiven Lösungsmittel, um eine zweite wässrige Schicht zu erhalten, und
Einstellens des pH-Werts der zweiten wässrigen Schicht auf weniger als 4, um das N-geschützte (S)-4-($^{10}B$)Borphenylalanin zu kristallisieren, um das N-geschützte (S)-4-($^{10}B$)Borphenylalanin aus der zweiten Schicht zu erhalten.

**17.** Verfahren nach Anspruch 10, wobei der Schritt des Entschützens der R-Gruppe des N-geschützten (S)-4-($^{10}B$)Borphenylalanins, um 4-($^{10}B$)Bor-L-phenylalanin zu erhalten, einen Schritt des Ansäuerns einer ersten organischen Lösung umfasst, die das N-geschützte (S)-4-($^{10}B$)Borphenylalanin umfasst, um die R-Gruppe des N-geschützten

(S)-4-($^{10}$B)Borphenylalanins zu entschützen, um 4-($^{10}$B)Bor-L-phenylalanin zu erhalten.

**18.** Verfahren nach Anspruch 10, wobei der Schritt des Entschützens der R-Gruppe des N-geschützten(S)-4-($^{10}$B)Borphenylalanins, um 4-($^{10}$B)Bor-L-phenylalanin zu erhalten, die Schritte umfasst des:

Ansäuerns einer ersten organischen Lösung, die das N-geschützte (S)-4-($^{10}$B)Borphenylalanin umfasst, um die R-Gruppe des N-geschützten (S)-4-($^{10}$B)Borphenylalanins zu entschützen, um eine saure Mischung zu erhalten; und

Einstellens des pH-Werts der sauren Mischung auf über 1, um das 4-($^{10}$B)Bor-L-phenylalanin zu kristallisieren, um 4-($^{10}$B)Bor-L-phenylalanin aus der sauren Mischung zu erhalten.

## Revendications

**1.** Procédé de préparation de 4-borono-L-phénylalanine, **caractérisé en ce que** le procédé comprend les étapes consistant à :

faire réagir de la (S)-4-halogénophénylalanine N-protégée de formule (I), un agent de boronation et un organolithium pour obtenir un mélange réactionnel, le mélange réactionnel comprenant la (S)-4-boronophénylalanine N-protégée de formule (II) et le groupe R représente un groupe protecteur

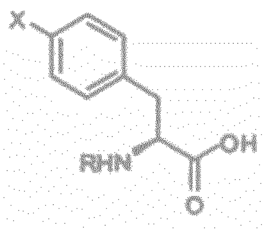
formule (I)

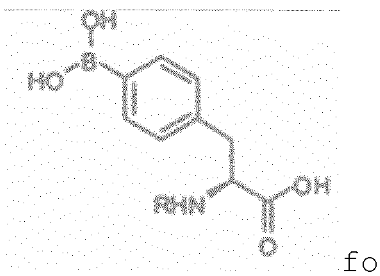
formule (II) ;

séparer la (S)-4-boronophénylalanine N-protégée du mélange réactionnel ; et

déprotéger le groupe R de la (S)-4-boronophénylalanine N-protégée pour obtenir la 4-borono-L-phénylalanine (L-BPA), dans lequel le groupe X de la (S)-4-halogénophénylalanine N-protégée de formule (I) est l'iode ou le brome, l'agent de boronation comprend le borate de tributyle, le borate de triéthyle, le borate de triméthyle, le borate de triisopropyle, le borate de tripropyle ou le borate de tri-tert-butyle, et l'organolithium est le n-butyllithium, le méthyllithium ou le sec-butyllithium.

**2.** Procédé selon la revendication 1, dans lequel le groupe R de la (S)-4-halogénophénylalanine N-protégée de formule (I) et de la (S)-4-boronophénylalanine N-protégée de formule (II) est sélectionné dans le groupe constitué par : le groupe *tert*-butoxycarbonyle (t-Boc), le groupe trityle (Trt), le groupe 3,5-diméthoxyphénylisopropoxycarbonyle (Ddz), le groupe 2-(4-biphényl)isopropoxycarbonyle (Bpoc) et le groupe 2-nitrophénylsulfényle (Nps).

**3.** Procédé selon la revendication 1, dans lequel l'étape consistant à faire réagir la (S)-4-halogénophénylalanine N-protégée de formule (I), l'agent de boronation et l'organolithium pour obtenir le mélange réactionnel consiste à faire réagir la (S)-4-halogénophénylalanine N-protégée de formule (I), l'agent de boronation et l'organolithium à une température comprise dans la plage allant de -50 °C à -100 °C pour obtenir le mélange réactionnel.

**4.** Procédé selon la revendication 1, dans lequel l'étape consistant à faire réagir la (S)-4-halogénophénylalanine N-protégée de formule (I), l'agent de boronation et l'organolithium pour obtenir le mélange réactionnel consiste à :

faire réagir la (S)-4-halogénophénylalanine N-protégée de formule (I), l'agent de boronation et l'organolithium avec un rapport équivalent de l'agent de boronation à la (S)-4-halogénophénylalanine N-protégée compris dans la plage allant de 2 à 5, de sorte à obtenir le mélange réactionnel.

**5.** Procédé selon la revendication 1, dans lequel l'étape consistant à faire réagir la (S)-4-halogénophénylalanine N-protégée de formule (I), l'agent de boronation et l'organolithium pour obtenir le mélange réactionnel consiste à :

faire réagir la (S)-4-halogénophénylalanine N-protégée de formule (I), l'agent de boronation et l'organolithium avec un rapport équivalent de l'agent de boronation à la (S)-4-halogénophénylalanine N-protégée qui est d'au moins 3.

**6.** Procédé selon la revendication 1, dans lequel l'étape consistant à faire réagir la (S)-4-halogénophénylalanine N-protégée de formule (I), l'agent de boronation et l'organolithium pour obtenir le mélange réactionnel comprend les étapes consiste à :

mélanger la (S)-4-halogénophénylalanine N-protégée, un solvant réactionnel et l'agent de boronation pour obtenir une solution mixte ; et
ajouter une solution organique inerte comprenant l'organolithium dans la solution mixte à une température comprise dans la plage allant de -50 °C à -100 °C, de sorte à obtenir le mélange réactionnel.

**7.** Procédé selon la revendication 1, dans lequel l'étape consistant à séparer la (S)-4-boronophénylalanine N-protégée du mélange réactionnel comprend les étapes consistant à :

ajouter une solution aqueuse dans le mélange réactionnel pour obtenir une première phase aqueuse, extraire la première phase aqueuse avec un solvant d'extraction pour obtenir une seconde phase aqueuse, et
ajuster la valeur de pH de la seconde phase aqueuse à moins de 4 pour faire cristalliser la (S)-4-boronophénylalanine N-protégée, de sorte à obtenir la (S)-4-boronophénylalanine N-protégée à partir de la seconde phase aqueuse.

**8.** Procédé selon la revendication 1, dans lequel l'étape consistant à déprotéger le groupe R de la (S)-4-boronophénylalanine N-protégée pour obtenir la L-BPA comprend une étape consistant à : acidifier une première solution organique comprenant la (S)-4-boronophénylalanine N-protégée pour déprotéger le groupe R de la (S)-4-boronophénylalanine N-protégée afin d'obtenir la L-BPA.

**9.** Procédé selon la revendication 1, dans lequel l'étape consistant à déprotéger le groupe R de la (S)-4-boronophénylalanine N-protégée pour obtenir la L-BPA comprend les étapes consistant à :

acidifier une première solution organique comprenant la (S)-4-boronophénylalanine N-protégée pour déprotéger le groupe R de la (S)-4-boronophénylalanine N-protégée afin d'obtenir un mélange acide ; et
ajuster la valeur de pH du mélange acide au-dessus de 1 pour faire cristalliser la L-BPA, de sorte à obtenir la L-BPA à partir du mélange acide.

**10.** Procédé selon la revendication 1, dans lequel l'agent de boronation a une pureté en $^{10}$B non inférieure à 98 %, et la 4-borono-L-phénylalanine est la 4-($^{10}$B)borono-L-phénylalanine et la (S)-4-boronophénylalanine N-protégée de formule (II) est la (S)-4-($^{10}$B)boronophénylalanine N-protégée.

**11.** Procédé selon la revendication 10, dans lequel le groupe R de la (S)-4-halogénophénylalanine N-protégée de formule (I) et de la (S)-4-($^{10}$B)boronophénylalanine N-protégée de formule (II) est sélectionné dans le groupe constitué par le groupe *tert*-butoxycarbonyle, le groupe trityle, le groupe 3,5-diméthoxyphénylisopropoxycarbonyle, le groupe 2-(4-biphényl)isopropoxycarbonyle et le groupe 2-nitrophénylsulfényle.

**12.** Procédé selon la revendication 10, dans lequel l'étape consistant à faire réagir la (S)-4-halogénophénylalanine N-protégée, l'agent de boronation et l'organolithium pour obtenir un mélange réactionnel consiste à faire réagir la (S)-4-halogénophénylalanine N-protégée, l'agent de boronation et l'organolithium à une température comprise dans la plage allant de -50 °C à -100 °C pour obtenir le mélange réactionnel.

**13.** Procédé selon la revendication 10, dans lequel l'étape consistant à faire réagir la (S)-4-halogénophénylalanine N-protégée de formule (I), l'agent de boronation et l'organolithium pour obtenir le mélange réactionnel consiste à :

faire réagir la (S)-4-halogénophénylalanine N-protégée de formule (I), l'agent de boronation et l'organolithium avec un rapport équivalent de l'agent de boronation à la (S)-4-halogénophénylalanine N-protégée de formule (I) compris dans la plage allant de 2 à 5.

**14.** Procédé selon la revendication 10, dans lequel l'étape consistant à faire réagir la (S)-4-halogénophénylalanine N-protégée de formule (I), l'agent de boronation et l'organolithium pour obtenir le mélange réactionnel consiste à :

faire réagir la (S)-4-halogénophénylalanine N-protégée de formule (I), l'agent de boronation et l'organolithium avec un rapport équivalent de l'agent de boronation à la (S)-4-halogénophénylalanine N-protégée de formule (I) qui est d'au moins 3.

**15.** Procédé selon la revendication 10, dans lequel l'étape consistant à faire réagir la (S)-4-halogénophénylalanine N-protégée, l'agent de boronation et l'organolithium pour obtenir le mélange réactionnel comprend les étapes consiste à :

mélanger la (S)-4-halogénophénylalanine N-protégée, un solvant réactionnel et l'agent de boronation pour obtenir une solution mixte ; et
ajouter une solution organique inerte comprenant l'organolithium dans la solution mixte à une température comprise dans la plage allant de -50 °C à -100 °C, de sorte à obtenir le mélange réactionnel.

**16.** Procédé selon la revendication 10, dans lequel l'étape consistant à séparer la (S)-4-($^{10}$B)boronophénylalanine N-protégée du mélange réactionnel comprend les étapes consistant à :

ajouter une solution aqueuse dans le mélange réactionnel pour obtenir une première phase aqueuse, extraire la première phase aqueuse avec un solvant d'extraction pour obtenir une seconde phase aqueuse, et
ajuster la valeur de pH de la seconde phase aqueuse à moins de 4 pour faire cristalliser la (S)-4-($^{10}$B)boronophénylalanine N-protégée, de sorte à obtenir la (S)-4-($^{10}$B)boronophénylalanine N-protégée à partir de la seconde phase aqueuse.

**17.** Procédé selon la revendication 10, dans lequel l'étape consistant à déprotéger le groupe R de la (S)-4-($^{10}$B)boronophénylalanine N-protégée pour obtenir la 4-($^{10}$B)borono-L-phénylalanine comprend une étape consistant à acidifier une première solution organique comprenant la (S)-4-($^{10}$B)boronophénylalanine N-protégée pour déprotéger le groupe R de la (S)-4-($^{10}$B)boronophénylalanine N-protégée afin d'obtenir la 4-($^{10}$B)borono-L-phénylalanine.

**18.** Procédé selon la revendication 10, dans lequel l'étape consistant à déprotéger le groupe R de la (S)-4-($^{10}$B)boronophénylalanine N-protégée pour obtenir la 4-($^{10}$B)borono-L-phénylalanine comprend les étapes consistant à :

acidifier une première solution organique comprenant la (S)-4-($^{10}$B)boronophénylalanine N-protégée pour déprotéger le groupe R de la (S)-4-($^{10}$B)boronophénylalanine N-protégée afin d'obtenir un mélange acide ; et
ajuster la valeur de pH du mélange acide au-dessus de 1 pour faire cristalliser la 4-($^{10}$B)borono-L-phénylalanine, de sorte à obtenir la 4-($^{10}$B)borono-L-phénylalanine à partir du mélange acide.

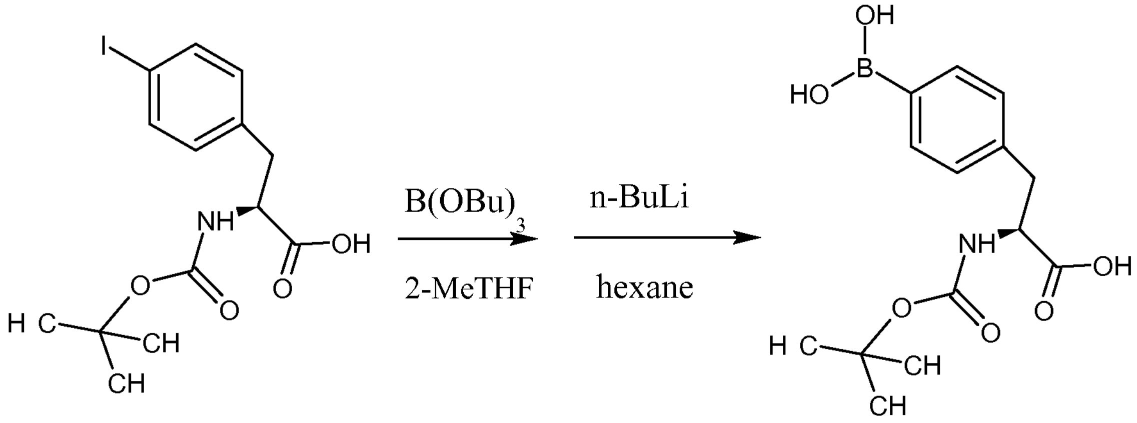


Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *J.Org.Chem.,* 1998, vol. 63, 8019
- *Biosci.Biotech.Biochem.,* 1996, vol. 60, 683
- *J. Org. Chem.,* 1998, vol. 63, 8019
- *Bull.Chem.Soc.Jpn.,* 2000, vol. 73, 231-235
- *Synthesis,* 2011, vol. 24, 4059-4067